# EUROPEAN PATENT SPECIFICATION

(11) **EP 4 404 503 B1**
(45) Date of publication and mention of the grant of the patent: **26.08.2026**
(21) Application number: 21956827.6
(22) Date of filing: 13.09.2021
(51) Int. Cl.: H04L 9/32, G06F 21/60, G06F 21/62, G06F 21/64, G06Q 10/10, G06Q 50/18, G06Q 50/26

(54) **DATA MANAGEMENT SYSTEM**
DATENVERWALTUNGSSYSTEM
SYSTÈME DE GESTION DE DONNÉES

(43) Date of publication of application: 24.07.2024
(60) Divisional application: 26180659.0 / 4 787 284
(73) Proprietor: GVE Ltd., Chuo-ku Tokyo 103-0026 (JP)
(72) Inventor: TAKAMATSU Keita, Tokyo 103-0026 (JP); FUSA Koji, Tokyo 103-0026 (JP); KUSAKABE Yu, Tokyo 103-0026 (JP)
(74) Representative: Vossius & Partner Patentanwälte Rechtsanwälte mbB
(86) International application number: PCT/JP2021/033437
(87) International publication number: WO 2023/037530

(56) References cited:
- JP-A- 2002 247 031
- JP-A- 2002 247 031
- JP-A- 2019 500 799
- US-A1- 2019 020 661
- BRUHADESHWAR BEZAWADA ET AL: "A Family of Collusion Resistant Symmetric Key Protocols for Authentication", 5 January 2008, DISTRIBUTED COMPUTING AND NETWORKING; [LECTURE NOTES IN COMPUTER SCIENCE], SPRINGER BERLIN HEIDELBERG, BERLIN, HEIDELBERG, PAGE(S) 387 - 392, ISBN: 978-3-540-77443-3, XP019086134

## Description

### Technical Field

The present invention relates to management of data.

### Background

There has been proposed a system which adds and verifies an electronic signature by using a public key method (see, e.g., PTL 1).

### Citation List

### Patent Literature

PTL 1: Japanese Patent Application Publication No.
2008-140298. PTL 2: US 2019/020661 A1 discloses communication using signed messages with copies to a blockchain for verification of received messages. PTL 3: JP2002247031 A discloses the use of private keys for document signing.

A method for authenticating messages using symmetric keys has also been proposed in NPL 1. 1

NPL1 : BRUHADESHWAR BEZAWADA ET AL: "A Family of Collusion Resistant Symmetric Key Protocols for Authentication", 5 January 2008 (2008-01-05), DISTRIBUTED COMPUTING AND NETWORKING;ISBN: 978-3-540-77443-3 1

### Summary

### Technical Problem

An object of an embodiment of the present invention is to provide a data management system which adds and verifies an electronic signature by using a private key method.

### Solution to Problem

The present invention includes the following embodiment.

A data management system including a client device, a first electronic signature device, a data management device, a second electronic signature device, a data storage device, and a third electronic signature device, wherein at least one of the first electronic signature device, the second electronic signature device, and the third electronic signature device is an electronic signature device capable of storing an encryption key in association with an authority and performing, from among processing operations using the encryption key, only the processing operation according to the authority.

### Advantageous Effects of Invention

According to the embodiment of the present invention, it is possible to provide a data management system which adds and verifies an electronic signature by using a private key method.

### Brief Description of the Drawing

[Fig. 1]

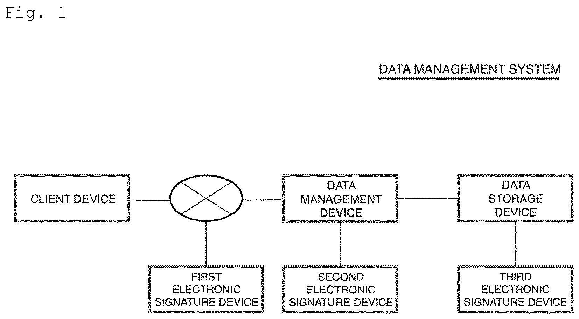

   Fig. 1 is a diagram illustrating an example of a configuration of a data management system according to a first embodiment.
[Fig. 2]

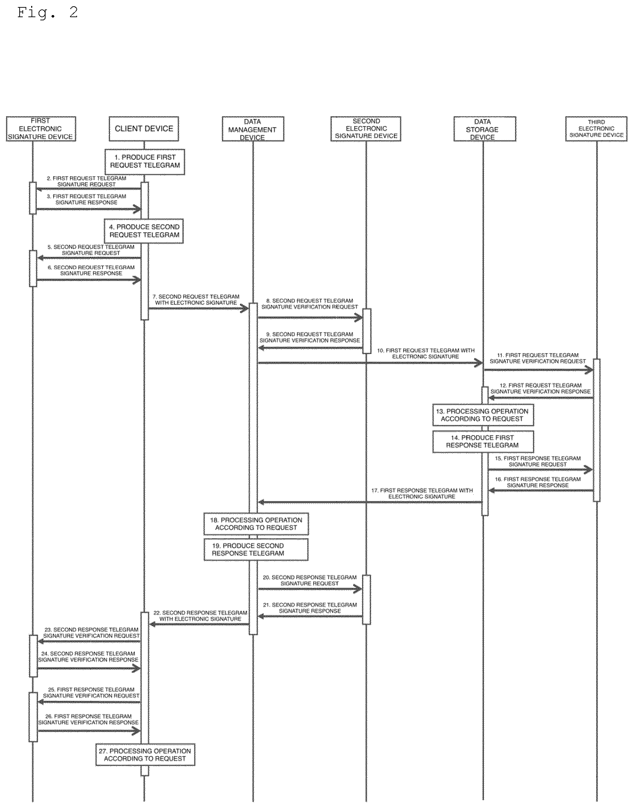

   Fig. 2 is a diagram illustrating an example of an operation of the data management system according to the first embodiment.
[Fig. 3A]

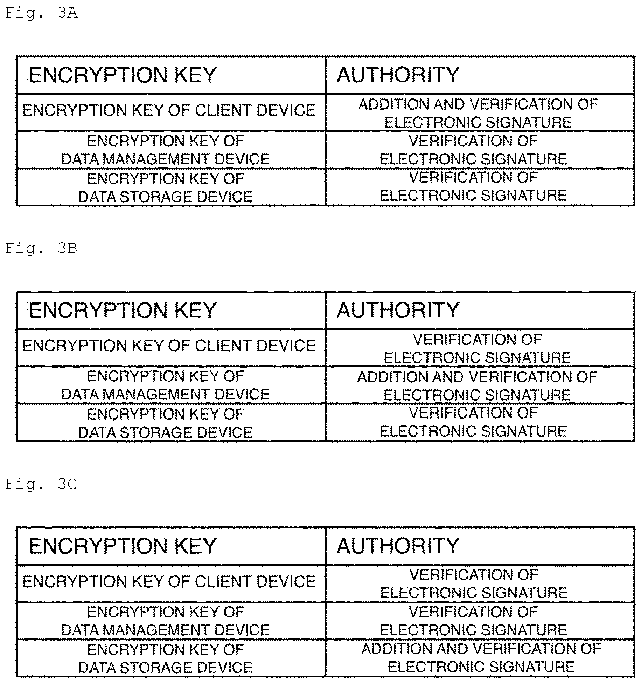

   Fig. 3A is a diagram illustrating an example of storage of keys and authorities in a first electronic signature device.
[Fig. 3B]
   Fig. 3B is a diagram illustrating an example of storage of the keys and the authorities in a second electronic signature device.
[Fig. 3C]
   Fig. 3C is a diagram illustrating an example of storage of the keys and the authorities in a third electronic signature device.
[Fig. 4]

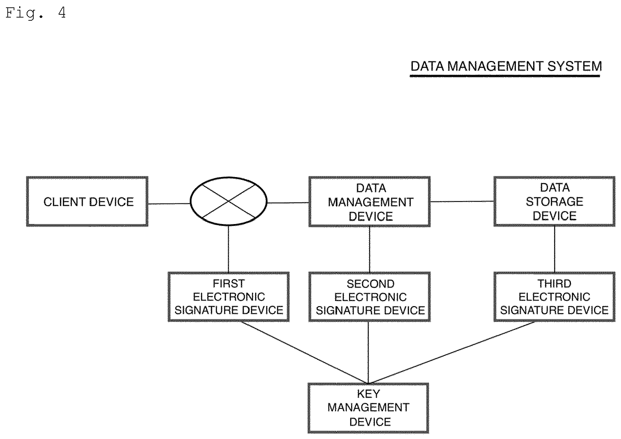

   Fig. 4 is a diagram illustrating an example of a configuration of a data management system according to a second embodiment.

### Detailed Description

### [Data Management System According to First Embodiment]

Fig. 1 is a diagram illustrating an example of a configuration of a data management system according to a first embodiment. As illustrated in Fig. 1, the data management system according to the first embodiment is a data management system including a client device, a first electronic signature device, a data management device, a second electronic signature device, a data storage device, and a third electronic signature device. Hereinbelow, a description will be given of each of the devices.

### (Client Device)

The client device is a device that transmits various request telegrams. Examples of the client device include a laptop computer, a smartphone, and a tablet-type computer. Examples of the request telegrams include various data such as a packet and a signal. A first request telegram and a second request telegram each described later are examples of the request telegrams. The first request telegram is a telegram that requests the data storage device to perform a predetermined processing operation, while the second request telegram is a telegram that requests the data management device to perform a predetermined processing operation. The client device performs predetermined processing operations on the basis of a first response telegram and/or a second response telegram. Examples of the predetermined processing operation based on the first response telegram include display of acquired data, display of a data registration result, and processing of confirming this. Examples of the predetermined processing operation based on the second response telegram include display of reasons for refusing the processing operations requested by the first and second requests, processing of confirming this (only when the processing operation is refused by the data management device or the data storage device), and storage of a telegram transmission/reception history.

### (Data Management Device)

A data management device is a device that performs the predetermined processing operation on the basis of the second request telegram received from the client device and transmits the second response telegram to the client device. Examples of the predetermined processing operation performed by the data management device include data registration and data acquisition. Examples of the data management device include a server computer. Examples of the second response telegram include a data registration response and a data acquisition response.

### (Data Storage Device)

The data storage device is a device that performs the predetermined processing operation on the basis of the first request telegram received from the client device via the data management device and transmits the second response telegram to the client device via the data management device. Examples of the predetermined processing operation performed by the data storage device include data encryption distributed writing and distributed data decryption reading. Examples of the data storage device include a distributed storage server (DSS). Examples of the first response telegram include a data encryption distributed writing response and a distributed data decryption reading response.

### (First Electronic Signature Device, Second Electronic Signature Device, and Third Electronic Signature Device)

The first electronic signature device, the second electronic signature device, and the third electronic signature device are devices that add electronic signatures to telegrams such as a request telegram and a response telegram and verify the electronic signatures added to those telegrams. As each of the first electronic signature device, the second electronic signature device, and the third electronic signature device, e.g., a HSM (Hardware Security Module) or the like can be used. The first electronic signature device is an electronic signature device to be used in the client device. The second electronic signature device is an electronic signature device to be used in the data management device. The third electronic signature device is an electronic signature device to be used in the data storage device.

The first electronic signature device may be connected to the client device via a network, may be connected to the client device without going through a network, or may also be embedded in the client device. In the present embodiment, it is assumed that the first electronic signature device is connected to the client device via a network.

The second electronic signature device may be connected to the data management device via a network, may be connected to the data management device without going through a network, or may also be embedded in the data management device. In the present embodiment, it is assumed that the second electronic signature device is connected to the data management device without going through a network.

The third electronic signature device may be connected to the data storage device via a network, may be connected to the data storage device without going through a network, or may also be embedded in the data storage device. In the present embodiment, it is assumed that the third electronic signature device is connected to the data storage device without going through a network.

Fig. 3A is a diagram illustrating an example of storage of keys and authorities in the first electronic signature device. Fig. 3B is a diagram illustrating an example of storage of the keys and the authorities in the second electronic signature device. Fig. 3C is a diagram illustrating an example of storage of the keys and the authorities in the third electronic signature device. As illustrated in Fig. 3A, Fig. 3B, and Fig. 3C, at least one of the first electronic signature device, the second electronic signature device, and the third electronic signature device (each of all the electronic signature devices in the present embodiment) is an electronic signature device capable of storing an encryption key in association with an authority and performing, from among processing operations using the encryption key, only the processing operation according to the authority.

Known electronic signature devices include one which produces/verifies an electronic signature on the basis of a public key method.

However, in a case of the public key method, there are a public key and a private key, and the public key is extremely long (Example: 2048 bits).

Meanwhile, in a case of a private key method, encryption and verification is performed using a private key (Example: 256 bits). Thus, in the case of the private key method, a long public key need not be used, and accordingly a time period for production/addition and verification of the electronic signature can be reduced. However, in a case of using the private key method, an encryption key (private key) should be shared among a plurality of electronic signature devices. Consequently, even the electronic signature device that performs only the verification of the electronic signature produced with a given encryption key can produce an electronic signature by using the encryption key, resulting in a security problem. For example, in the example described above, the first electronic signature device possesses even encryption keys of the data management device and the data storage device in addition to an encryption key of the client device. However, in the first electronic signature device, the encryption keys of the data management device and the data storage device are used only for the verification of the electronic signature. Nevertheless, the first electronic signature device can produce the electronic signature by using the encryption keys of the data management device and the data storage device. In other words, the client device can impersonate the data management device or the data storage device by using the first electronic signature device.

Therefore, in the present embodiment, it is assumed that the first electronic signature device, the second electronic signature device, and the third electronic signature device use a private key method, and encryption keys (private keys) are shared among these electronic signature devices. However, in the present embodiment, it is assumed that, to prevent a security problem from occurring, authorities are added to the plurality of shared encryption keys (private keys), and the first electronic signature device, the second electronic signature device, and the third electronic signature device can use the plurality of encryption keys (private keys) only in processing operations according to the authorities thereof. Thus, it is possible to reduce time periods for production/addition and verification of the electronic signatures, while ensuring security. For example, as illustrated in Fig. 3A, the first electronic signature device has not only the encryption key of the client device, but also the encryption keys of the data management device and the data storage device. However, it is assumed that the authorities for addition and verification have been given to the encryption key of the client device, while only the authority for verification has been given to the encryption keys of the other devices. This allows the first electronic signature device to perform both the addition and verification of the electronic signature by using the encryption key of the client device, while allowing the first electronic signature device to perform only the verification of the electronic signature by using the encryption keys of the other devices.

In the present embodiment, it is assumed that, to sufficiently ensure security, each of the first electronic signature device, the second electronic signature device, and the third electronic signature device is an electronic signature device capable of storing an encryption key in association with an authority and performing, from among processing operations using the encryption key, only the processing operation according to the authority.

The number of bits in the encryption key is, e.g., 128 or 256. The encryption key is used for both the addition and verification of the electronic signature. For the addition and verification of the electronic signature, an AES method or another method can be used.

Examples of the authority include "being able to perform the addition and verification of the electronic signature" and "being able to perform only the verification of the electronic signature", and additionally include "being able to perform the addition of the electronic signature only in a predetermined case", "being able to perform the verification of the electronic signature only in a predetermined case", and "being able to perform the verification of the electronic signature at any time, but being able to perform the addition of the electronic signature only in a predetermined case".

### (Operation Example)

Fig. 2 is a diagram illustrating an example of an operation of the data management system according to the first embodiment. Hereinbelow, referring to Fig. 2, the example of the operation of the data management system according to the first embodiment will be described. Note that, in the present description, "addition" of the electronic signature may be referred to also as "adding" of the electronic signature.

### (Step 1)

First, the client device produces the first request telegram.

### (Step 2)

Next, the client device transmits the first request telegram to the first electronic signature device.

### (Step 3)

Next, the first electronic signature device uses the encryption key of the client device to add the electronic signature to the first request telegram and transmits, to the client device, the first request telegram with the electronic signature added thereto.

### (Step 4)

Next, the client device produces the second request telegram including the first request telegram with the electronic signature added thereto.

### (Step 5)

Next, the client device transmits the second request telegram to the first electronic signature device.

### (Step 6)

Next, the first electronic signature device uses the encryption key of the client device to add the electronic signature to the second request telegram and transmits, to the client device, the second request telegram with the electronic signature added thereto.

### (Step 7)

Next, the client device transmits, to the data management device, the second request telegram with the electronic signature added thereto.

### (Step 8)

Next, the data management device transmits, to the second electronic signature device, the second request telegram with the electronic signature added thereto.

### (Step 9)

Next, the second electronic signature device uses the encryption key of the client device to verify the electronic signature added to the second request telegram and transmits a result of the verification to the data management device.

### (Step 10)

Next, the data management device transmits, to the data storage device, the first request telegram with the electronic signature added thereto on the basis of the result of the verification by the second electronic signature device.

### (Step 11)

Next, the data management device transmits, to the third electronic signature device, the first request telegram with the electronic signature added thereto.

### (Step 12)

Next, the third electronic signature device uses the encryption key of the client device to verify the electronic signature added to the first request telegram and transmits a result of the verification to the data storage device.

### (Step 13)

Next, the data storage device performs a processing operation according to the first request telegram on the basis of the result of the verification by the third electronic signature device.

### (Step 14)

Next, the data storage device produces the first response telegram.

### (Step 15)

Next, the data storage device transmits the first response telegram to the third electronic signature device.

### (Step 16)

Next, the third electronic signature device uses an encryption key of the data storage device to add the electronic signature to the first response telegram and transmits, to the data storage device, the first response telegram with the electronic signature added thereto.

### (Step 17)

Next, the data storage device transmits, to the data management device, the first response telegram with the electronic signature added thereto.

### (Step 18)

Next, the data management device performs a processing operation according to the second request telegram.

### (Step 19)

Next, the data management device produces the second response telegram including the first response telegram with the electronic signature added thereto.

### (Step 20)

Next, the data management device transmits the second response telegram to the second electronic signature device.

### (Step 21)

Next, the second electronic signature device uses an encryption key of the data management device to add the electronic signature to the second response telegram and transmits, to the data management device, the second response telegram with the electronic signature added thereto.

### (Step 22)

Next, the data management device transmits, to the client device, the second response telegram with the electronic signature added thereto.

### (Step 23)

Next, the client device transmits, to the first electronic signature device, the second response telegram with the electronic signature added thereto.

### (Step 24)

Next, the first electronic signature device uses the encryption key of the data management device to verify the electronic signature added to the second response telegram and transmits a result of the verification to the client device.

### (Step 25)

Next, the client device transmits, to the first electronic signature device, the first response telegram with the electronic signature added thereto.

### (Step 26)

Next, the first electronic signature device uses the encryption key of the data storage device to verify the electronic signature added to the first response telegram and transmits a result of the verification to the client device.

### (Step 27)

Next, the client device performs a predetermined processing operation on the basis of the result of the verification.

According to the first embodiment described heretofore, it is possible to provide a data management system which adds and verifies an electronic signature by using a private key method (method in which an encryption key is shared among a plurality of electronic signature devices). In addition, according to the first embodiment, it is also possible to provide a high-security data management system in which, even though an encryption key is shared among a plurality of electronic signature devices, a given device (example: client device) is prevented from impersonating another device (example: data management device or data storage device). Moreover, by setting various conditions as authorities to be associated with encryption keys, each of the client device, the data management device, and the data storage device uses only addition and verification of an electronic signature allowed in the data management system, and even a private key method (method in which an encryption key is shared among a plurality of electronic signature devices) allows operation of the strictly managed electronic signature.

### [Data Management System According to Second Embodiment]

Fig. 4 is a diagram illustrating an example of a configuration of a data management system according to a second embodiment. As illustrated in Fig. 4, the data management system according to the second embodiment is different from the data management system according to the first embodiment in that a key management device is connected to the first electronic signature device, the second electronic signature device, and the third electronic signature device. As described above, in the first electronic signature device, the second electronic signature device, and the third electronic signature device, the respective encryption keys of the client device, the data management device, and the data storage device are shared. The key management device is a device that associates these shared encryption keys with different authorities to set these for each of the electronic signature devices. By doing so, when, e.g., a new signature key is added to one of the devices, it is possible to distribute, to another of the devices, the signature key having an appropriate authority for verifying a signature produced from the signature key. The key management device may be connected to the first electronic signature device, the second electronic signature device, and the third electronic signature device via a network, or may also be connected to the first electronic signature device, the second electronic signature device, and the third electronic signature device without going through a network. In the present embodiment, it is assumed that the key management device is connected to the first electronic signature device, the second electronic signature device, and the third electronic signature device without going through a network.

Hereinbelow, an example of the data management system using the first or second embodiment will be described.

### First Example

The data management system according to the first or second embodiment can be used to manage, e.g., vaccination certificates (example: vaccine passport). In this case, examples of the client device include devices used by a hospital, a vaccinated person, an airport custom, an amusement park, a restaurant, and the like. The hospital uses the device managed thereby to store vaccination certificates in the data storage device. Meanwhile, each of the vaccinated person, the airport custom, the amusement park, the restaurant, and the like can use the device managed thereby to display, on a screen of the client device, the vaccination certificates stored in the data storage device or print the vaccination certificates.

### Second Example

The data management system according to the first or second embodiment can be used for, e.g., real estate registration. In this case, examples of the client device include devices used by a registration office, a corporation, an individual, a financial institute, and the like. The registration office can use the device thereof to store data related to real estate registration in the data storage device. Meanwhile, each of the corporation, the individual, the financial institute, and the like can use the device managed thereby to display, on a screen of the client device, the data related to real estate registration which is stored in the data storage device or print the data.

### Third Example

The data management system according to the first or second embodiment can be used for, e.g., company registration. In this case, e.g., the client device is used in each of a registration office, a corporation, an individual, a financial institute, and the like. The registration office uses the client device to store data related to company registration in the data storage device. Meanwhile, each of the corporation, the individual, the financial institute, and the like can use the client device to display, on a screen of the client device, data related to company registration which is stored in the data storage device or print the data.

While the description has been given heretofore of the examples, the data storage system according to the first or second embodiment can be used to store various other data.

While the description has been given heretofore of the embodiments, the present invention is by no means limited by such a description but is instead defined by the appended claims.

## Claims

1. A data management system comprising:
a client device;
a first electronic signature device;
a data management device;
a second electronic signature device;
a data storage device; and
a third electronic signature device, wherein
the client device produces a first request telegram,
the client device transmits the first request telegram to the first electronic signature device,
the first electronic signature device uses an encryption key of the client device to add an electronic signature to the first request telegram and transmits, to the client device, the first request telegram with the electronic signature added thereto,
the client device produces a second request telegram including the first request telegram with the electronic signature added thereto,
the client device transmits the second request telegram to the first electronic signature device,
the first electronic signature device uses the encryption key of the client device to add an electronic signature to the second request telegram and transmits, to the client device, the second request telegram with the electronic signature added thereto,
the client device transmits, to the data management device, the second request telegram with the electronic signature added thereto,
the data management device transmits, to the second electronic signature device, the second request telegram with the electronic signature added thereto,
the second electronic signature device uses the encryption key of the client device to verify the electronic signature added to the second request telegram and transmits a result of the verification to the data management device,
the data management device transmits, to the data storage device, the first request telegram with the electronic signature added thereto on the basis of the result of the verification by the second electronic signature device,
the data storage device transmits, to the third electronic signature device, the first request telegram with the electronic signature added thereto,
the third electronic signature device uses the encryption key of the client device to verify the electronic signature added to the first request telegram and transmits a result of the verification to the data storage device,
the data storage device performs a processing operation according to the first request telegram on the basis of the result of the verification by the third electronic signature device to produce a first response telegram and transmits the first response telegram to the third electronic signature device,
the third electronic signature device uses an encryption key of the data storage device to add an electronic signature to the first response telegram and transmits, to the data storage device, the first response telegram with the electronic signature added thereto,
the data storage device transmits, to the data management device, the first response telegram with the electronic signature added thereto,
the data management device performs a processing operation according to the second request telegram to produce a second response telegram including the first response telegram with the electronic signature added thereto and transmits the second response telegram to the second electronic signature device,
the second electronic signature device uses an encryption key of the data management device to add an electronic signature to the second response telegram and transmits, to the data management device, the second response telegram with the electronic signature added thereto,
the data management device transmits, to the client device, the second response telegram with the electronic signature added thereto,
the client device transmits, to the first electronic signature device, the second response telegram with the electronic signature added thereto,
the first electronic signature device uses the encryption key of the data management device to verify the electronic signature added to the second response telegram and transmits a result of the verification to the client device,
the client device transmits, to the first electronic signature device, the first response telegram with the electronic signature added thereto,
the first electronic signature device uses the encryption key of the data storage device to verify the electronic signature added to the first response telegram and transmits a result of the verification to the client device, and
the client device performs a predetermined processing operation on the basis of the result of the verification by the first electronic signature device.

2. The data management system according to claim 1, wherein at least one of the first electronic signature device, the second electronic signature device, and the third electronic signature device is an electronic signature device capable of storing an encryption key in association with an authority and performing, from among processing operations using the encryption key, only the processing operation according to the authority.

## Patentansprüche

1. Datenverwaltungssystem, aufweisend:
eine Client-Vorrichtung;
eine erste elektronische Signaturvorrichtung;
eine Datenverwaltungsvorrichtung;
eine zweite elektronische Signaturvorrichtung;
eine Datenspeichervorrichtung; und
eine dritte elektronische Signaturvorrichtung, wobei
die Client-Vorrichtung ein erstes Anforderungstelegramm erzeugt,
die Client-Vorrichtung das erste Anforderungstelegramm an die erste elektronische Signaturvorrichtung überträgt,
die erste elektronische Signaturvorrichtung einen Verschlüsselungsschlüssel der Client-Vorrichtung verwendet, um eine elektronische Signatur zu dem ersten Anforderungstelegramm hinzuzufügen, und das erste Anforderungstelegramm mit der daran hinzugefügten elektronischen Signatur an die Client-Vorrichtung überträgt,
die Client-Vorrichtung ein zweites Anforderungstelegramm erzeugt, das das erste Anforderungstelegramm mit der daran hinzugefügten elektronischen Signatur einschließt,
die Client-Vorrichtung das zweite Anforderungstelegramm an die erste elektronische Signaturvorrichtung überträgt,
die erste elektronische Signaturvorrichtung den Verschlüsselungsschlüssel der Client-Vorrichtung verwendet, um eine elektronische Signatur zu dem zweiten Anforderungstelegramm hinzuzufügen und das zweite Anforderungstelegramm mit der daran hinzugefügten elektronischen Signatur an die Client-Vorrichtung überträgt,
die Client-Vorrichtung das zweite Anforderungstelegramm mit der daran hinzugefügten elektronischen Signatur an die Datenverwaltungsvorrichtung überträgt,
die Datenverwaltungsvorrichtung das zweite Anforderungstelegramm mit der daran hinzugefügten elektronischen Signatur an die zweite elektronische Signaturvorrichtung überträgt,
die zweite elektronische Signaturvorrichtung den Verschlüsselungsschlüssel der Client-Vorrichtung verwendet, um die zu dem zweiten Anforderungstelegramm hinzugefügte elektronische Signatur zu verifizieren, und ein Ergebnis der Verifizierung an die Datenverwaltungsvorrichtung überträgt,
die Datenverwaltungsvorrichtung das erste Anforderungstelegramm mit der daran hinzugefügten elektronischen Signatur auf der Grundlage des Ergebnisses der Verifizierung durch die zweite elektronische Signaturvorrichtung an die Datenspeichervorrichtung überträgt,
die Datenspeichervorrichtung das erste Anforderungstelegramm mit der daran hinzugefügten elektronischen Signatur an die dritte elektronische Signaturvorrichtung überträgt,
die dritte elektronische Signaturvorrichtung den Verschlüsselungsschlüssel der Client-Vorrichtung verwendet, um die zu dem ersten Anforderungstelegramm hinzugefügte elektronische Signatur zu verifizieren, und ein Ergebnis der Verifizierung an die Datenspeichervorrichtung überträgt,
die Datenspeichervorrichtung einen Verarbeitungsvorgang gemäß dem ersten Anforderungstelegramm auf der Grundlage des Ergebnisses der Verifizierung durch die dritte elektronische Signaturvorrichtung durchführt, um ein erstes Antworttelegramm zu erzeugen, und das erste Antworttelegramm an die dritte elektronische Signaturvorrichtung überträgt,
die dritte elektronische Signaturvorrichtung einen Verschlüsselungsschlüssel der Datenspeichervorrichtung verwendet, um eine elektronische Signatur zu dem ersten Antworttelegramm hinzuzufügen, und das erste Antworttelegramm mit der daran hinzugefügten elektronischen Signatur an die Datenspeichervorrichtung überträgt,
die Datenspeichervorrichtung das erste Antworttelegramm mit der daran hinzugefügten elektronischen Signatur an die Datenverwaltungsvorrichtung überträgt,
die Datenverwaltungsvorrichtung einen Verarbeitungsvorgang gemäß dem zweiten Anforderungstelegramm durchführt, um ein zweites Antworttelegramm zu erzeugen, das das erste Antworttelegramm mit der daran hinzugefügten elektronischen Signatur einschließt, und das zweite Antworttelegramm an die zweite elektronische Signaturvorrichtung überträgt,
die zweite elektronische Signaturvorrichtung einen Verschlüsselungsschlüssel der Datenverwaltungsvorrichtung verwendet, um eine elektronische Signatur zu dem zweiten Antworttelegramm hinzuzufügen, und das zweite Antworttelegramm mit der daran hinzugefügten elektronischen Signatur an die Datenverwaltungsvorrichtung überträgt,
die Datenverwaltungsvorrichtung das zweite Antworttelegramm mit der daran hinzugefügten elektronischen Signatur an die Client-Vorrichtung überträgt,
die Client-Vorrichtung das zweite Antworttelegramm mit der daran hinzugefügten elektronischen Signatur an die erste elektronische Signaturvorrichtung überträgt,
die erste elektronische Signaturvorrichtung den Verschlüsselungsschlüssel der Datenverwaltungsvorrichtung verwendet, um die zu dem zweiten Antworttelegramm hinzugefügte elektronische Signatur zu verifizieren, und ein Ergebnis der Verifizierung an die Client-Vorrichtung überträgt,
die Client-Vorrichtung das erste Antworttelegramm mit der daran hinzugefügten elektronischen Signatur an die erste elektronische Signaturvorrichtung überträgt,
die erste elektronische Signaturvorrichtung den Verschlüsselungsschlüssel der Datenspeichervorrichtung verwendet, um die zu dem ersten Antworttelegramm hinzugefügte elektronische Signatur zu verifizieren, und ein Ergebnis der Verifizierung an die Client-Vorrichtung überträgt, und
die Client-Vorrichtung einen vorbestimmten Verarbeitungsvorgang auf der Grundlage des Ergebnisses der Verifizierung durch die erste elektronische Signaturvorrichtung durchführt.

2. Datenverwaltungssystem nach Anspruch 1, wobei mindestens eines der ersten elektronischen Signaturvorrichtung, der zweiten elektronischen Signaturvorrichtung und der dritten elektronischen Signaturvorrichtung eine elektronische Signaturvorrichtung ist, die dazu imstande ist, einen Verschlüsselungsschlüssel in Zuordnung zu einer Berechtigung zu speichern und aus Verarbeitungsvorgängen unter Verwendung des Verschlüsselungsschlüssels nur den Verarbeitungsvorgang gemäß der Berechtigung durchzuführen.

## Revendications

1. Système de gestion de données comprenant :
un dispositif client ;
un premier dispositif de signature électronique ;
un dispositif de gestion de données ;
un deuxième dispositif de signature électronique ;
un dispositif de stockage de données ; et
un troisième dispositif de signature électronique, dans lequel
le dispositif client produit un premier télégramme de demande,
le dispositif client transmet le premier télégramme de demande au premier dispositif de signature électronique,
le premier dispositif de signature électronique utilise une clé de chiffrement du dispositif client pour ajouter une signature électronique au premier télégramme de demande et transmet, au dispositif client, le premier télégramme de demande avec la signature électronique ajoutée à celui-ci,
le dispositif client produit un second télégramme de demande comportant le premier télégramme de demande avec la signature électronique ajoutée à celui-ci,
le dispositif client transmet le second télégramme de demande au premier dispositif de signature électronique,
le premier dispositif de signature électronique utilise la clé de chiffrement du dispositif client pour ajouter une signature électronique au second télégramme de demande et transmet, au dispositif client, le second télégramme de demande avec la signature électronique ajoutée à celui-ci,
le dispositif client transmet, au dispositif de gestion de données, le second télégramme de demande avec la signature électronique ajoutée à celui-ci,
le dispositif de gestion de données transmet, au deuxième dispositif de signature électronique, le second télégramme de demande avec la signature électronique ajoutée à celui-ci,
le deuxième dispositif de signature électronique utilise la clé de chiffrement du dispositif client pour vérifier la signature électronique ajoutée au second télégramme de demande et transmet un résultat de la vérification au dispositif de gestion de données,
le dispositif de gestion des données transmet, au dispositif de stockage de données, le premier télégramme de demande avec la signature électronique ajoutée à celui-ci sur la base du résultat de la vérification par le deuxième dispositif de signature électronique,
le dispositif de stockage de données transmet, au troisième dispositif de signature électronique, le premier télégramme de demande avec la signature électronique ajoutée à celui-ci,
le troisième dispositif de signature électronique utilise la clé de chiffrement du dispositif client pour vérifier la signature électronique ajoutée au premier télégramme de demande et transmet un résultat de la vérification au dispositif de stockage de données,
le dispositif de stockage de données effectue une opération de traitement selon le premier télégramme de demande sur la base du résultat de la vérification par le troisième dispositif de signature électronique pour produire un premier télégramme de réponse et transmet le premier télégramme de réponse au troisième dispositif de signature électronique,
le troisième dispositif de signature électronique utilise une clé de chiffrement du dispositif de stockage de données pour ajouter une signature électronique au premier télégramme de réponse et transmet, au dispositif de stockage de données, le premier télégramme de réponse avec la signature électronique ajoutée à celui-ci,
le dispositif de stockage de données transmet, au dispositif de gestion de données, le premier télégramme de réponse avec la signature électronique ajoutée à celui-ci,
le dispositif de gestion de données effectue une opération de traitement selon le second télégramme de demande pour produire un second télégramme de réponse comportant le premier télégramme de réponse avec la signature électronique ajoutée à celui-ci et transmet le second télégramme de réponse au deuxième dispositif de signature électronique,
le deuxième dispositif de signature électronique utilise une clé de chiffrement du dispositif de gestion de données pour ajouter une signature électronique au second télégramme de réponse et transmet, au dispositif de gestion de données, le second télégramme de réponse avec la signature électronique ajoutée à celui-ci,
le dispositif de gestion de données transmet, au dispositif client, le second télégramme de réponse avec la signature électronique ajoutée à celui-ci,
le dispositif client transmet, au premier dispositif de signature électronique, le second télégramme de réponse avec la signature électronique ajoutée à celui-ci,
le premier dispositif de signature électronique utilise la clé de chiffrement du dispositif de gestion de données pour vérifier la signature électronique ajoutée au second télégramme de réponse et transmet un résultat de la vérification au dispositif client,
le dispositif client transmet, au premier dispositif de signature électronique, le premier télégramme de réponse avec la signature électronique ajoutée à celui-ci,
le premier dispositif de signature électronique utilise la clé de chiffrement du dispositif de stockage de données pour vérifier la signature électronique ajoutée au premier télégramme de réponse et transmet un résultat de la vérification au dispositif client, et
le dispositif client effectue une opération de traitement prédéterminée sur la base du résultat de la vérification par le premier dispositif de signature électronique.

2. Système de gestion de données selon la revendication 1, dans lequel au moins l'un parmi le premier dispositif de signature électronique, le deuxième dispositif de signature électronique et le troisième dispositif de signature électronique est un dispositif de signature électronique pouvant stocker une clé de chiffrement en association avec une autorité, et effectuer, parmi des opérations de traitement à l'aide de la clé de chiffrement, uniquement l'opération de traitement selon l'autorité.
